Europäisches Patentamt

European Patent Office

Office européen des brevets

(19)

(11) Veröffentlichungsnummer: **0 093 188**

**A1**

(12) # EUROPÄISCHE PATENTANMELDUNG

(21) Anmeldenummer: 82103818.9

(22) Anmeldetag: 04.05.82

(51) Int. Cl.³: **G 01 F 23/00**
G 01 F 23/06

(43) Veröffentlichungstag der Anmeldung:
09.11.83 Patentblatt 83/45

(84) Benannte Vertragsstaaten:
AT BE CH DE FR GB IT LI NL SE

(71) Anmelder: OMÜV Orvosi Müszer és Vasipari
Szövetkezet
Munkácsy u. 48
H-2045 Törökbálint(HU)

(72) Erfinder: Koty, Antal, Dipl.-Masch.-Ing.
Szamuely u.8
H-2045 Törökbálint(HU)

(72) Erfinder: Hell, Arpád
Arany I. u. 40
H-2045 Törökbálint(HU)

(72) Erfinder: Hidvegi, Ferenc
Bajcsy Zs. U. 52
H-2045 Törökbálint(HU)

(74) Vertreter: Bardehle, Heinz, Dipl.-Ing.
Patent- und Rechtsanwälte Bardehle, Pagenberg, Dost,
Altenburg & Partner Postfach 86 06 20
D-8000 München 86(DE)

(54) **Gerät zur Erfassung von Datenserien, insbesondere zur gradierten Erfassung von Flüssigkeitsständen.**

(57) Die Erfindung betrifft ein Geraet zur Erfassung von Datehserien, insbesondere zur gradierten Erfassung von Flüssigkeitsstaenden, dessen Messfühler Schaltelemente, vorteilhaft elektronische oder mechanische oder optische Schaltelemente oder deren Kombinationen sind, weiterhin dessen Signalempfaengereinheit/en/ aus zwei oder mehreren miteinander in Reihe geschalteten Signalempfaengern besteht (bestehen), die durch einen Stromgenerator betaetigt werden.

Das Wesen der Erfindung besteht darin, dass die Messfühler oder die aus Messfühlern zusammengestellten Messfühlergruppen mit vorteilhaft gleicher Gliederzahl und die den Messfühlergruppen zugeordneten Zulassungsschalter so geschaltet sind, dass die Pole der Messfühler oder der Messfühler innerhalb der einzelnen Messfühlergruppen und/ oder der Zulassungsschalter unabhaengig von der Reihenfolge, an den Eingang von (einer) Signalempfaengereinheit/ en/ angeschlossen, die nacheinander aus je einem bzw. aufeinander folgenden, miteinander in Reihe geschalteten mehreren Signalempfaengern bestehende, innerhalb der jeweiligen Messfühlergruppe voneinander abweichende und in jeder Messfühlergruppe sich wiederholende Kodgruppen bildet (bilden).

Fig.1

OMÜV·Orvosi Müszer- és Vasipari Szövetkezet,

Törökbálint, (Ungarn)

Geraet zur Erfassung von Datenserien, insbesondere
zur gradierten Erfassung von Flüssigkeitsstaenden

Die Erfindung betrifft ein Geraet, das zur Erfassung
von Datenserien, insbesondere zur gradierten Erfassung
von Flüssigkeitsstaenden geeignet ist und dessen Messfühler Schaltelemente, vorteilhaft elektronische oder
mechanische oder optische Schaltelemente oder deren Kombinationen sind, weiterhin dessen Signalempfaengereinheit/en/ aus zwei oder mehreren miteinander in Reihe
geschalteten Signalempfaengern besteht (bestehen), die
durch einen Stromgenerator betaetigt werden.

Es ist bekannt, dass bei den zur Erfassung von Datenserien, insbesondere zur gradierten Erfassung von Flüssigkeitsstaenden geeigneten Geraeten eine Erhöhung der
Anzahl der zu erfassenden Staende wegen der linearen
Zunahme der Zahl der für die Weiterleitung der Information notwendigen Kabel auf sehr grosse Schwierigkeiten
stösst. Bei mit Reed-Schaltern erfolgender Erfassung von
Datenserien betraegt die Anzahl der Kabel das Doppelte
der Anzahl der Messstellen, waehrend wenn einer der Pole
der Reed-Schalter gemeinsam ist, dann ist die Anzahl der
Kabel um eins höher als die der Messstellen.

38285-3347/br

Es sind Lösungen bekannt, wo auch die Speicherung der Information im Zusammenhang mit der Erfassung notwendig ist. Eine solche Lösung stellen z.B. die Patentschriften SU-PS 539 222 und US-PS 4 056 979 vor. Um die Information speichern zu können, werden hier solche Lösungen angewendet, bei denen das Speichern in Richtung der abwaerts bzw. aufwaerts erfolgenden Fortbewegung mit Hilfe eines doppelten Magnetsystems gelöst wird. Die Reed-Schalter werden mit einem Magneten mit niedriger Feldstaerke so sehr vorgespannt, dass der Vorspannmagnet den Schalter nicht selbstaendig einschalten kann, nur wenn der Magnet im Schwimmer die Feldstaerke des Vorspannmagneten erhöht. Die Feldstaerke des Vorspannmagneten wird also so gewaehlt, dass die Federkraft der Reed-Schalter grösser ist als die Feldstaerke des Vorspannmagneten. Der Vorspannmagnet ist jedoch in der Lage, auch nach dem Passieren des Schwimmers den eingeschalteten Zustand aufrechtzuerhalten, da die Abreisskraft grösser als die Federkraft der Reed-Schalter ist. So kann also bei richtiger Einstellung des Ausmasses der Vorspannung die Information speicherbar und der Prozess abwaerts bzw. aufwaerts quasi reissverschlussartig schliessbar bzw. trennbar gemacht werden.

Diese Systeme sind sehr empfindlich gegenüber Erschütterungen und Stössen, das ist wiederum beim schnellen Einströmen von technologischen Flüssigkeiten unvermeidlich. Eine weitere Fehlermöglichkeit besteht darin, dass auf die Wirkung der sich aus dem Altern der Magneten ergebenden Feldstaerkeabnahme hin Schaltungsunsicherheit auftritt.

Das Ziel der Erfindung ist es, ein solches Erfassungssystem zu schaffen, das die Speicherung der Information unabhaengig vom Messfühler macht, und gleichzeitig unter Verwendung von relativ wenig Kabeladern von vielen Mess-
staenden Informationen liefert.

Der Erfindung liegt die Erkenntnis zugrunde, dass durch
den Anschluss der die Information weiterleitenden Kabeladern an entsprechende kodierende Signalempfaengereinheiten und die Weiterleitung dieser Informationen in einen
Speicher sowohl das Problem des Speicherns als auch bei
vielen Messstellen die bedeutende Abnahme der Anzahl der
Kabeladern mit beliebigen Messfühlern gelöst werden können.

Das Wesen der Erfindung besteht darin, dass die Messfühler oder die aus Messfühlern zusammengestellten Messfühlergruppen mit vorteilhaft gleicher Gliederzahl und die
den Messfühlergruppen zugeordneten Zulassungsschalter
so geschaltet sind, dass die Pole der Messfühler oder
der Messfühler innerhalb der einzelnen Messfühlergruppen
und/oder der Zulassungsschalter, unabhaenjig von der
Reihenfolge, an den Eingang von einer Signalempfaengereinheit/en/ angeschlossen sind, die nacheinander aus je
einem bzw. aufeinander folgenden, miteinander in Reihe
geschalteten mehreren Signalempfaengern bestehende, innerhalb der jeweiligen Messfühlergruppe voneinander abweichende und in jeder Messfühlergruppe sich wiederholende Kodgruppen bildet (bilden).

Die Erfindung wird ausführlicher mit Hilfe der in der
Zeichnung dargestellten Beispielen erlaeutert. Es zeigen

Fig. 1    die Schaltung einer aus zehn Messfühlern bestehenden erfindungsgemaessen Messfühlergruppe an
          die informationskodierende Signalempfaengerein-
          heit,

Fig. 2   die erfindungsgemaesse Art der Zulassung von zehn Messfühlergruppen, und

Fig. 3   die erfindungsgemaesse Schaltungsanordnung der Dekodereinheiten bei zwei Messfühlergruppen.

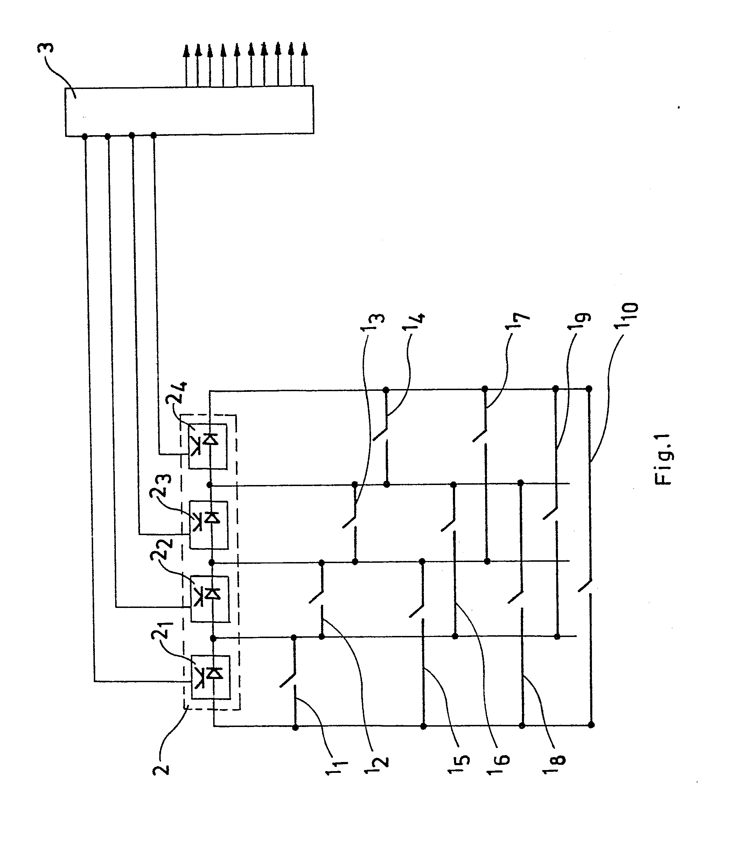

Im Geraet befinden sich Messfühler $l_1$, $l_2$ ... $l_n$, die in m Gruppen unterteilt sind, und jede Messfühlergruppe $l_1^n$, $l_2^n$ ... $l_m^n$ Messfühler $l_i$ enthaelt. Der Messfühler $l_1$ in der Messfühlergruppe $l_1^n$ ist - wie in Fig. 1 dargestellt - an den informationskodierenden Signalempfaenger $2_1$ einer informationskodierenden Signalempfaengereinheit 2 angeschlossen, der Messfühler $l_2$ an den informationskodierenden Signalempfaenger $2_2$ usw. der Messfühler $l_5$ an die miteinander in Reihe geschalteten informationskodierenden Signalempfaenger $2_1$ und $2_2$, der Messfühler $l_6$ an die miteinander in Reihe geschalteten informationskodierenden Signalempfaenger $2_2$ und $2_3$ usw. der Messfühler $l_8$ an die miteinander in Reihe geschalteten informationskodierenden Signalempfaenger $2_1$, $2_2$ und $2_3$, der Messfühler $l_9$ an die miteinander in Reihe geschalteten informationskodierenden Signalempfaenger $2_2$, $2_3$ und $2_4$, waehrend der Messfühler $l_{10}$ an die miteinander in Reihe geschalteten informationskodierenden Signalempfaenger $2_1$, $2_2$, $2_3$ und $2_4$ angeschlossen ist. Aus Fig. 1 ist ersichtlich, dass in diesem Fall fünf Kabeladern notwendig sind.

Es ist nachweisbar, dass wenn die Anzahl der informationskodierenden Signalempfaenger $2_j$ h ist, so h+1 Kabeladern notwendig sind und damit $n = \dfrac{\boxed{h+1}\cdot h}{2}$ Messfühler $l_i$ im Geraet angewendet werden können.

Bei diesem Beispiel wurde vorausgesetzt, dass es bei jedem Messstand nur einen Messfühler $l_i$ gibt und jeder einzelne Messfühler $l_i$ mit zwei Kabeladern an zwei Eingaenge der informationskodierenden Signalempfaengereinheit angeschlossen werden kann. Die Ausgaenge der informationskodierenden Signalempfaengereinheit 2 sind an die Informationseingaenge einer Dekodereinheit 3 angeschlossen.

Die Anzahl der Messfühler $1_i$ kann vervielfacht werden,
wenn aus den Messfühlern $1_i$ mehrere Messfühlergruppen
$1_1^n$, $1_2^n$ ... $1_m^n$ mit gleichem Aufbau gebildet werden und
dafür gesorgt wird, dass immer nur die Informationen einer
einzigen Messfühlergruppe $1_i^n$ kodiert werden können, die
übrigen hingegen gleichzeitig gesperrt werden. Das ist
auch deshalb notwendig, weil sich in jeder Messfühlergruppe $1_i^n$ die in der ersten Messfühlergruppe $1_1^n$ schon
angegebenen Kodgruppen wiederholen, es also unbedingt
notwendig ist, sie zu sperren. Die dazu dierenden Zulassungsschalter $4_j$ sind im wesentlichen sich auf den Ebenen
zwischen den Messfühlergruppen $1_1^n$, $1_2^n$ ... $1_m^n$ befindende
Messfühler, die durch die Betaetigung des ihnen folgenden
naechsten Zulassungsschalters $4_{j+1}$ gleichzeitig gesperrt
werden. Genausoviel Zulassungsschalter 4 sind notwendig,
wie es Messfühlergruppen $1_i^n$ gibt, wozu - traditionell -
die Anzahl der abgehenden Kabel mindestens um eins höher
waere.

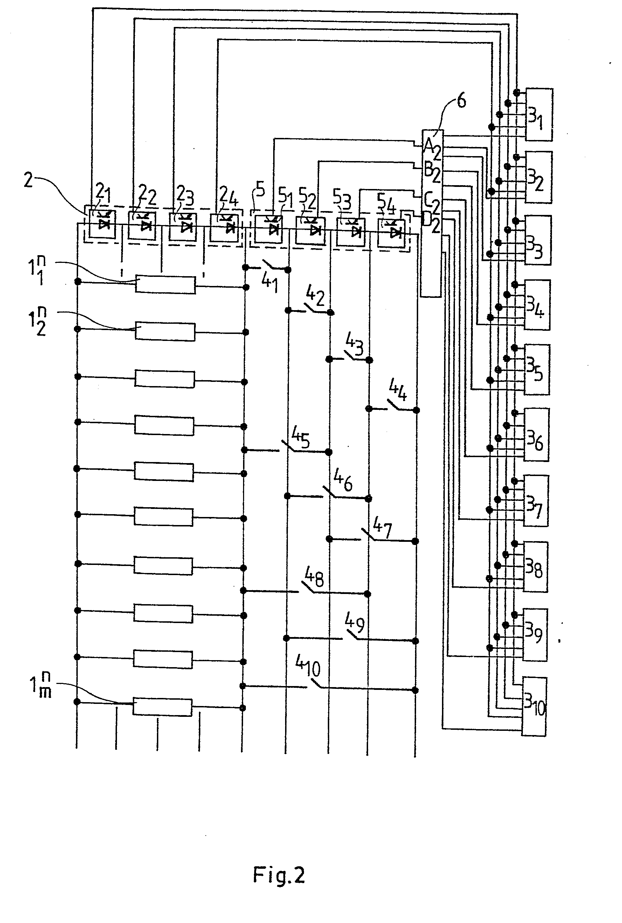

Wie aus Fig. 2 ersichtlich ist, wo das erfindungsgemaesse
Zulassungssystem von zehn Messfühlergruppen $1_1^{10}$ ... $1_{10}^{10}$
vorgestellt wird, betraegt die Anzahl der Zulassungsschalter 4 zwar unveraendert soviel wie bei der traditionellen
Lösung, wenn jedoch die Schaltung wie innerhalb der einzelnen Messfühlergruppen $1_i^n$ erfolgt, kann aus dem Zusammenhang $m = \dfrac{k \cdot (k+1)}{2}$ errechnet werden, wieviel Kabeladern k und wieviele die Zulassung kodierende Signalempfaenger $5_1$, $5_2$ ... $5_k$ in der die Zulassung kodierenden
Signalempfaengereinheit 5 notwendig sind. Das bedeutet in
dem Fall m = 10 nach dem Beispiel in Fig. 2 k = 4 Kabel-

adern, da auch die eine Kabelader der Messfühler $l_i$ benutzt wurde (sonst waeren fünf Kabeladern notwendig).

Es kann also nachgewiesen werden, dass zur Weiterleitung der Informationen von n·m Messfühlern $l_i$ auf Grund des Zusammenhangs $\dfrac{(h+1)\cdot h}{2} \cdot \dfrac{k\cdot(k+1)}{2}$ k+h Kabel notwendig sind.

Bei diesem Beispiel sind die Ausgaenge der informationskodierenden Signalempfaengereinheit 2 mit den Informationseingaengen jeder Dekodereinheit $3_1$, $3_2$ ... $3_m$ verbunden. Die Anzahl der Dekodereinheiten $3_1$, $3_2$ ... $3_m$ ist identisch mit der der Messfühlergruppen $l_i^n$. Die die Zulassung kodierende Signaeempfaengereinheit 5 hat soviel Ausgaenge, wieviel die Zulassung kodierende Signalempfaenger $5_1$, $5_2$ ... $5_k$ in ihr enthalten sind. Die Ausgaenge der die Zulassung kodierenden Signalempfaengereinheit 5 sind mit einer die Zulassung dekodierenden Einheit 6 verbunden. Die die Zulassung dekodierende Einheit 6 hat soviel Ausgaenge, wie die Anzahl der Dekodereinheiten $3_1$, $3_2$ ... $3_m$ betraegt, und diese Ausgaenge sind an den (die) Zulassungseingang (Zulassungseingaenge) jeweils einer Dekodereinheit $3_1$, $3_2$ ... $3_m$ angeschlossen.

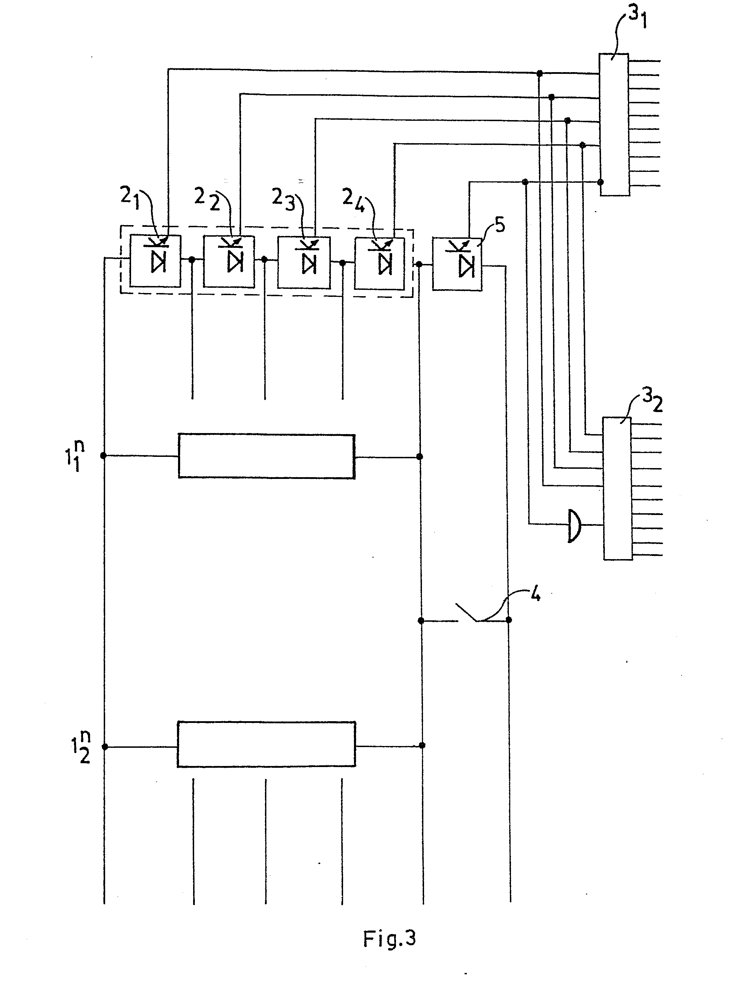

Schliesslich ist in dem Beispiel in Fig. 3 der Anschluss von zwei Messfühlergruppen $l_1^n$, $l_2^n$ veranschaulicht. In diesem Fall ist ein eirziger Zulassungsschalter 4 ausreichend, dessen Klemmen mit den zwei Ausgaengen einer solchen die Zulassung kodierenden Signalempfaengereinheit 5 verbunden sind, die aus einem einzigen die Zulassung kodierender Signalempfaenger $5_1$ besteht. Der Ausgang der die Zulassung kodierenden Signalempfaengereinheit 5 ist an den Zulassungseingang der einen Dekodereinheit $3_1$ direkt, an den Zulassungseingang der anderen Dekodereinheit $3_2$ über ein Sperrglied 7 angeschlossen.

0093188

Patentansprüche

1. Geraet zur Erfassung von Datenserien, insbesondere zur gradierten Erfassung von Flüssigkeitsstaenden, dessen Messfühler Schaltelemente, vorteilhaft elektronische oder mechanische oder optische Schaltelemente oder deren Kombinationen sind, weiterhin dessen Signalempfaengereinheit/en/ aus zwei oder mehreren miteinander in Reihe geschalteten Signalempfaengern besteht (bestehen), die durch einen Stromgenerator betaetigt werden, dadurch g e - k e n n z e i c h n e t , dass die Messfühler ($1_1$, $1_2$ ... $1_n$) oder die aus Messfühlern ($1_1$, $1_2$ ... $1_{nm}$) zusammengestellten Messfühlergruppen ($1_1^n$, $1_2^n$ ... $1_m^n$) mit vorteilhaft gleicher Gliederzahl und die den Messfühlergruppen ($1_1^n$, $1_2^n$ ... $1_m^n$) zugeordneten Zulassungsschalter ($4_1$, $4_2$ ... $4_m$) so geschaltet sind, dass die Pole der Messfühler ($1_1$, $1_2$ ... $1_n$) oder der Messfühler ($1_1$, $1_2$ ... $1_{nm}$) innerhalb der einzelnen Messfühlergruppen ($1_1^n$, $1_2^n$ ... $1_m^n$) und/oder der Zulassungsschalter ($4_1$, $4_2$ ... $4_m$) unabhaengig von der Reihenfolge, an den Eingang von (einer) Signalempfaengereinheit/en/ (2; 5) angeschlossen sind, die nacheinander aus je einem bzw. aufeinander folgenden, miteinander in Reihe geschalteten mehreren Signalempfaengern ($2_1$, $2_2$ ... $2_n$ ; $5_1$, $5_2$ ... $5_n$) bestehende, innerhalb der jeweiligen Messfühlergruppe ($1_i^n$) voneinander abweichende und in jeder Messfühlergruppe ($1_1^n$, $1_2^n$ ... $1_m^n$) sich wiederholende Kodgruppen bildet (bilden).

2.    Geraet nach Anspruch 1, dadurch g e k e n n -
z e i c h n e t , dass sich auf jeder Messebene nur ein
Messfühler ($l_1$, $l_2$ ... $l_{nm}$) befindet.

3.    Geraet nach Anspruch 1 oder 2, dadurch g e k e n n -
z e i c h n e t , dass die Messfühler ($l_1$, $l_2$ ... $l_n$)
an je zwei Eingaenge einer informationskodierenden Signalempfaengereinheit (2) angeschlossen  sind, und die Ausgaenge der informationskodierenden Signalempfaengereinheit (2) mit den Informationseingaengen einer Dekodereinheit (3) verbunden sind.

4.    Geraet nach Anspruch 1 oder 2, dadurch g e k e n n -
z e i c h n e t , dass die Messfühlergruppen ($l_1^n$, $l_2^n$ ...
$l_m^n$) bzw. die Messfühler ($l_1$, $l_2$ ... $l_{nm}$) innerhalb der
Messfühlergruppen ($l_1^n$, $l_2^n$ ... $l_m^n$) nacheinander parallel
an die aus jenen informationskodierenden Signalempfaengern
($2_1$, $2_2$ ... $2_n$) bestehenden Kodgruppen angeschlossen
sind, die sich in der informationskodierenden Signalempfaengereinheit (2) befinden.

5. Geraet nach Anspruch 4, dadurch g e k e n n z e i c h -
n e t , dass die Zulassungsschalter ($4_1$, $4_2$ ... $4_m$) auf
den Ebenen zwischen den Messfühlergruppen ($l_1^n$, $l_2^n$ ... $l_m^n$)
angeordnet sind.

6. Geraet nach Anspruch 5, dadurch g e k e n n -
z e i c h n e t , dass die Zulassungsschalter ($4_1$, $4_2$
... $4_m$) an je zwei Eingaenge einer die Zulassung kodierenden Signalempfaengereinheit (5) angeschlossen sind, und
die Ausgaenge der die Zulassung kodierenden Signalempfaengereinheit (5), die gleichzeitig die Ausgaenge der die Zulassung kodierenden Signalempfaenger ($5_1$, $5_2$ ... $5_k$) in
der die Zulassung kodierenden Signalempfaengereinheit (5)
sind, direkt oder indirekt mit den Zulassungseingaengen
der Dekodereinheiten ($3_1$, $3_2$ ... $3_m$) verbunden sind.

7. Geraet nach Anspruch 7, dadurch g e k e n n -
z e i c h n e t , dass es zwei Messfühlergruppen ($1_1^n$,
$1_2^n$), einen die Zulassung kodierenden Signalempfaenger ($5_1$)
und zwei Dekodereinheiten ($3_1$,$3_2$) aufweist, weiterhin
dass der Ausgang der die Zulassung kodierenden Signalempfaengereinheit (5) an den Zulassungseingang der einen
Dekodereinheit ($3_1$) direkt, an den Zulassungseingang der
anderen Dekodereinheit ($3_2$) über ein Sperrglied (7) angeschlossen ist.

8. Geraet nach Anspruch 6, dadurch g e k e n n -
z e i c h n e t , dass es eine aus zwei oder mehreren,
die Zulassung kodierenden Signalempfaengern ($5_1$, $5_2$ ... $5_k$)
bestehende, die Zulassung kodierende Signalempfaengereinheit (5), weiterhin drei oder mehrere Dekodereinheiten ($3_1$,
$3_2$ ... $3_m$) aufweist und die die Zulassung kodierenden Sig-

nalempfaenger ($5_1$, $5_2$ ... $5_k$) über eine die Zulassung dekodierende Einheit /(6) mit zwei oder mehreren Eingaengen
an die Zulassungseingaenge der Dekodereinheiten ($3_1$, $3_2$
,,, $3_m$) angeschlossen sind.

P 3377EU
0093188

113

Fig.1

0093188

Fig.2

Fig.3

**Europäisches Patentamt**

## EUROPÄISCHER RECHERCHENBERICHT

Nummer der Anmeldung

EP 82 10 3818

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 F 23/00 |
| X,Y | FR-C-1 520 771 (WHESSOE S.A.) * Seite 1, linke Spalte, Absatz 2 - rechte Spalte, Absatz 3; Seite 2, linke Spalte, Absatz 4; Seite 2, linke Spalte, Absatz 11 - rechte Spalte, Absatz 4; Figuren 1-3; Zusammenfassung * | 1,4,8 | G 01 F 23/06 |
| | --- | | |
| Y | FR-A-2 225 728 (REAKTIVA SZÖVETKEZET) * Figur 1; Seite 2, Zeilen 16-34; Seite 3, Zeile 30 - Seite 5, Zeile 8 * | 1-3 | |
| | --- | | |
| A | DE-A-2 720 761 (G.W. SEULEN) * Seite 5, Absatz 2; Seite 6, letzter Absatz * | 1 | |
| | --- | | RECHERCHIERTE SACHGEBIETE (Int. Cl. ³) |
| A | FR-A-1 059 354 (M. LAURY) * Figur 3 * | 1,5 | G 01 F |
| | --- | | |
| A,D | US-A-4 056 979 (BONGORT et al.) | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 07-01-1983 | NUIJTEN E.M. |